# EUROPÄISCHE PATENTSCHRIFT

(11) **EP 1 386 033 B1**
(45) Veröffentlichungstag und Bekanntmachung des Hinweises auf die Patenterteilung: **30.07.2008**
(21) Anmeldenummer: 02742883.8
(22) Anmeldetag: 10.04.2002
(51) Int. Cl.: D06N 1/00

(54) **Verfahren zur Herstellung eines Bodenbelags auf Linoleum Basis MIT VERBESSERTEN FLAMMSCHUTZEIGENSCHAFTEN**
METHOD FOR PRODUCING A LINOLEUM-BASED FLOOR COVERING WITH IMPROVED FLAME-RETARDANT PROPERTIES
PROCEDE DE PRODUCTION D'UN REVETEMENT DE SOL A BASE DE LINOLEUM PRESENTANT DES PROPRIETES DE RESISTANCE AU FEU AMELIOREES

(30) Priorität: 10.04.2001 DE 10117922
(43) Veröffentlichungstag der Anmeldung: 04.02.2004
(73) Patentinhaber: Armstrong DLW AG, 74321 Bietigheim-Bissingen (DE)
(72) Erfinder: MAUK, Hanns-Jörg, 74395 Mundelsheim (DE); ESS, Milko, 71691 Freiberg am Neckar (DE); SCHWONKE, Karl-Heinz, 74369 Löchgau (DE)
(74) Vertreter: Müller-Boré & Partner Patentanwälte
(86) Internationale Anmeldenummer: PCT/EP2002/003998
(87) Internationale Veröffentlichungsnummer: WO 2002/081812

(56) Entgegenhaltungen:
- EP-A- 0 888 859
- DE-A- 19 915 868
- GB-A- 761 672
- US-A- 2 412 303
- US-A- 5 132 171

## Beschreibung

Die vorliegende Erfindung betrifft ein Verfahren zur Herstellung von Bodenbelägen auf Linoleum-Basis mit neuartigen Farbmusterungsstrukturen.

Bodenbeläge auf Linoleum-Basis sowie Verfahren zu deren Herstellung sind seit langem bekannt. Ein Nachteil der im Stand der Technik bekannten Bodenbeläge auf Linoleum-Basis ist jedoch das nicht unkritische Brandverhalten. Linoleum erreicht nur mit Schwierigkeiten die Baustoffklasse B1 (Brandprüfung nach DIN 4102 T14, "Radiant Flooring Panel Test"). In Zukunft sollen die Anforderungen an Bodenbeläge durch eine neue EN-Norm verschärft werden. Beispielsweise muß derzeit ein Linoleum-Fußbodenbelag eine sogenannte kritische Strahlungsintensität von ≥ 4,5 kW/m² nach DIN 4102 T14 erreichen, um in die ökonomisch wichtige Baustoffklasse B1 eingeordnet zu werden. Bei einer zukünftigen Einführung der neuen Testmethode nach EN ISO 9239-1 und EN ISO 11925-2, die sich zwar an die alte Prüfung DIN 4102 T14 anlehnt, deren Klassifizierung aber nach prEN 13501-1 erfolgt, werden Bodenbeläge insbesonder Linoleum mit einem Testergebnis von ≥ 4,5 kW/m² nicht mehr in B1, sondern in C_{FL} eingestuft. Daraus können gegenüber anderen Kunststoffbodenbelägen beispielsweise PVC erhebliche Wettbewerbsnachteile entstehen. Erst bei einer kritischen Strahlungsintensität von ≥ 8 kW/m² wäre die Einstufung in die wirtschaftlich wichtige Baustoffklasse B_{FL} möglich. Das nicht unkritische Brandverhalten ist auch ein Nachteil der im Stand der Technik bekannten Bodenbeläge auf Kork-Basis.

Zur Erzeugung einer Farbmusterung, wie beispielsweise einer Jaspe-Struktur (Längsstruktur am Kalander) oder marmorähnlichen Struktur, sind jedoch üblicherweise Abmischungen verschiedenfarbiger Mischmassen notwendig, die in verschiedenen Arbeitsschritten hergestellt werden müssen. Diese Arbeitsschritte sind sowohl kosten- als auch zeitintensiv.

Somit liegt der vorliegenden Erfindung die weitere Aufgabe zugrunde, ein Verfahren zur Erzeugung von Farbmusterungen, wie Jaspé-artigen Strukturen oder marmorähnlichen Strukturen, von Linoleum-Bodenbelägen bereitzustellen, welches unter Beibehaltung der geforderten Qualität kostengünstiger, schneller und vorzugsweise auch neuartig sein soll.

Diese Aufgabe wird gemäß Anspruch 1 durch die Bereitstellung eines Verfahrens zur Herstellung eines Bodenbelags auf Linoleum-Basis gelöst, wobei der Bodenbelag mindestens eine Nutzschicht aus Linoleum umfaßt, welche mindestens einen expandierbaren Graphit als Flammschutzmittel enthält, worin die Linoleum-Mischmasse einem Kratzer zugeführt wird und anschließend mittels Kalandern oder Walzwerken zu Fellen verarbeitet wird, wobei der in der Linoleum-Mischmasse enthaltene expandierbare Graphit im Kratzer unter Erhalt mehrfarbiger Mischmassepartikel ungleichmäßig aufgeschlossen wird, welche bei einem nachfolgenden Kalandrieren oder Walzen Jaspé-artige Strukturen ergeben.

Erfindungsgemäß wird ein Bodenbelag auf Linoleum-Basis bereitgestellt, umfassend mindestens eine Nutzschicht aus Linoleum, welche mindestens ein Flammschutzmittel, ausgewählt aus der Gruppe der expandierbaren Graphite, enthält. Besonders bevorzugt ist ein expandierbarer Graphit wie Nord-MIN^{®} 251, Nord-Min^{®} 35 oder Nord-Min^{®} KP251, erhältlich von NRC Nordmann, Rassmann GmbH & Co., die in der nachfolgenden Tabelle 1 kurz charakterisiert werden.

**Tabelle 1**

| | Nord-Min 251 | Nord-Min 35 | Nord-Min KP 251 |
|---|---|---|---|
| | | | |
| Typ | Schwefelsäureeinschlußverbindung | Schwefelsäureeinschlußverbindung | Essigsäureeinschlußverbindung |
| Zersetzungstemperatur | ca. 200°C | ca.200°C | ca. 150°C |
| Expansionsvolumen | mind. 250 ml/g | ca. 35 ml/g | ca. 250 ml/g |
| Partikelgröße | mind. 80 %>0,3 mm | mind. 80%<0,15 mm | mind. 80%>0,3 mm |

Ferner kann in der Nutzschicht neben dem mindestens einen Flammschutzmittel aus der Gruppe der expandierbaren Graphite weiter ein Flammschutzmittel aus der Gruppe der verkohlungsfördernden Flammschutzmittel, der feuererstickenden Flammschutzmittel, wie Ammoniumphosphat oder Dipentaerythrit, der sperrschichtbildenden Flammschutzmittel, wie Wasserglas, Borate und Ammoniumpolyphosphate, der Intumeszenzmittel oder ein mindestens zwei dieser Flammschutzmittel enthaltendes Gemisch vorliegen. Das Intumeszenzmittel kann dabei aus der Gruppe, bestehend aus Harnstoff bzw. -Derivaten, Dicyandiamid, Melamin, Ammoniumpolyphosphaten, organischen Phosphaten und Gemischen davon, ausgewählt sein. Als Flammschutzmittel können beispielsweise auch anorganische Verbindungen, wie Aluminiumhydroxide, z.B. Al(OH)₃, und Borate, halogenierte organische Verbindungen, wie Chlorparaffine, organische Phosphorverbindungen, insbesondere Phosphate, Phosphite und Phosphonate, und halogenierte organische Phosphorverbindungen in der Linoleum-Nutzschicht neben dem mindestens einen Flammschutzmittel aus der Gruppe der expandierbaren Graphite verwendet werden. Die zusätzlich verwendeten Flammschutzmittel können einzeln oder als mindestens zwei dieser Flammschutzmittel (aus der gleichen oder unterschiedlichen, vorstehend aufgeführten Gruppen) enthaltendes Gemisch in der Linoleum-Nutzschicht vorliegen.

Das in der Nutzschicht erfindungsgemäß verwendete Flammschutzmittel weist vorzugsweise ein Expansionsvolumen von mindestens 30 ml/g auf. Der Anteil an Flammschutzmittel in der Nutzschicht aus Linoleum beträgt vorzugsweise bis zu 40 Gew.-%, mehr bevorzugt von 0,1 bis 20 Gew.-%, bezogen auf die Menge der Nutzschicht.

Des weiteren umfaßt die Nutzschicht aus Linoleum übliche Komponenten, wie Bindemittel (sog. Bedford-Zement oder B-Zement aus einem teiloxidierten Leinöl und mindestens einem Harz als Klebrigmacher), mindestens einen Füllstoff und ggf. mindestens ein Färbemittel. Als Füllstoff werden üblicherweise Weichholzmehl und/oder Korkmehl (bei gleichzeitiger Anwesenheit von Holzmehl und Korkmehl typischerweise im Gewichtsverhältnis 90:10) und/oder Kreide, Kaolin (China-Clay) und Schwerspat verwendet. Die Linoleum-Mischmasse enthält üblicherweise mindestens ein Färbemittel, wie ein Pigment (z.B. Titandioxid), und/oder andere übliche Färbemittel auf Basis von anorganischen und organischen Farbstoffen. Als Färbemittel können jegliche natürliche oder synthetische Farbstoffe sowie anorganische oder organische Pigmente, allein oder in beliebiger Kombination, verwendet werden.

Eine typische Linoleum-Zusammensetzung enthält, bezogen auf das Gewicht der Nutzschicht, etwa 40 Gew.-% Bindemittel, etwa 30 Gew.-% organische Stoffe, etwa 20 Gew.-% anorganische (mineralische) Füllstoffe und etwa 10 Gew.-% Färbemittel. Ferner können in der Linoleum-Mischmasse übliche Additive, wie Verarbeitungshilfsmittel, Antioxidantien, UV-Stabilisatoren, Gleitmittel und dergleichen enthalten sein, die in Abhängigkeit des Bindemittels ausgewählt werden.

Darüber hinaus kann der erfindungsgemäß erhaltene Bodenbelag auf Linoleum-Basis auch elektrisch leitfähig durch Zusatz mindestens eines Derivats des Imidazols, Imidazolins, Benzimidazols oder Morpholins oder einer kationenaktiven Verbindung (vgl. DE 34 16 573 und WO 99/10592) und/oder durch Anordnen einer Schicht auf Linoleum-Basis, welche mindestens einen elektrisch leitfähigen Füllstoff, beispielsweise Ruß oder Metallpulver, enthält, unter die Linoleum-Nutzschicht ausgebildet sein. Selbstverständlich kann auch eine derartige elektrisch leitfähige Schicht weiter ein oder mehrere der vorgenannten Flammschutzmittel enthalten.

Die Linoleum-Nutz- bzw. Oberschicht weist vorzugsweise eine Dicke von 0,9 bis 6,0 mm, besonders bevorzugt 1,4 bis 4 mm, auf. Unter Nutzschicht wird im Rahmen der vorliegenden Erfindung die aus einem homogenen Material aufgebaute, oberste Schicht des Bodenbelags verstanden.

Der erfindungsgemäß erhaltene Bodenbelag auf Linoleum-Basis kann trägerlos (vgl. DE 199 10 389 A1) sein oder einen Träger umfassen. Als Trägermaterial kann ein Material auf Basis natürlicher oder synthetischer Gewebe oder Gewirke sowie Textilwerkstoffe eingesetzt werden. Als Beispiele können Jutegewebe, Mischgewebe aus natürlichen Fasern, wie Baumwolle und Zellwolle, Glasfasergewebe, mit Haftmittel beschichtetes Glasfasergewebe, Mischgewebe aus Synthesefaser, Gewebe aus Kern/Mantelfasern mit z.B. einem Kern aus Polyester und einer Ummantelung aus Polyamid, genannt werden. Als Haftvermittler für Glasfasergewebe kann beispielsweise eine Beschichtung der Glasfasern aus einem StyrolButadien-Latex verwendet werden.

Der erfindungsgemäß erhaltene Bodenbelag kann mit oder ohne Träger ausgebildet sein, wobei die Linoleum-Nutzschicht sowohl einschichtig als auch mehrschichtig gestaltet sein kann. Dabei ergeben sich je nach Schichtfolge sowohl symmetrische als auch asymmetrische Flächengebilde, wobei bei trägerlosen Linoleum-Flächengebilden symmetrische Aufbauten bevorzugt sind. Beispielsweise kann der erfindungsgemäße Bodenbelag zwei Schichten aus Linoleum umfassen (materialhomogen), die gleich oder verschieden sein können.

Weiterhin kann unter der Linoleum-Nutzschicht eine Korkmentschicht mit oder ohne Träger angeordnet sein. Korkment ist eine Mischung, die B-Zement und gemahlenen Kork als Füllstoff enthält und bei Bodenbelägen als isolierende Unterschicht für eine bessere Wärmeisolierung, Trittelastizität und Gehkomfort sorgt und den Tritt- und Raumschall dämpft. Auch eine derartige Korkmentschicht kann weiter ein oder mehrere der vorgenannten Flammmschutzmittel umfassen.

Daneben können auch unter oder zwischen zwei Linoleumschichten funktionale Schichten angeordnet sein, so daß sich drei- oder mehrschichtige Flächengebilde ergeben. Beispielsweise kann unter der Nutzschicht des erfindungsgemäß erhaltenen Bodenbelags mindestens eine weitere Schicht, vorzugsweise eine Schaumschicht, eine Schicht zur Trittschalldämmung und/oder eine Isolationsschicht angeordnet sein. Die Schichtdicken der aufgebrachten Schichten können gleich oder verschieden sein. Alle diese unter oder zwischen zwei Linoleumschichten angeordneten funktionale Schichten können ebenfalls jeweils weiter ein oder mehrere der vorgenannten Flammschutzmittel enthalten.

Ferner kann auf der Rückseite des erfindungsgemäßen Bodenbelags ohne Träger mindestens eine Klebeschicht angeordnet sein.

Der erfindungsgemäß erhaltene Bodenbelag auf Linoleum-Basis kann in Form von Bahnen oder Fliesen vorliegen.

Die so erhaltenen Einzelfelle mit Jaspé-artigen Strukturen können ferner jeweils um 90° gedreht werden und schuppenartig übereinander gelegt werden. Durch ein erneutes Kalandrieren kann damit aus Jaspé-artigen Strukturen eine marmorähnliche Optik mit besonders plastischem Ausdruck erhalten werden, da der Graphit unterschiedlich aufgeschlossen wird und dadurch eine wolkenartige Struktur entsteht.

Ferner können aus dem "Jaspé-Flächengebilde" mehrfarbige Chips durch im Stand der Technik bekannte Verfahren hergestellt werden, die anschließend kalandriert werden, und so eine ungerichtete Struktur erzeugt werden kann.

Der Begriff "mehrfarbig" bedeutet hier insbesondere das Auftreten verschiedener Grautöne.

Dieses Verfahren der vorliegenden Erfindung ermöglicht überraschenderweise in einem Schritt die Dessinierung von Linoleum-Nutz- bzw. Oberschichten von derart hergestellten Flächengebilden. Beispielsweise kann mit diesem Verfahren zusätzlich zu der Jaspé- oder marmorähnlichen Dessinierung gleichzeitig eine metallische Flitteroptik des Flächengebildes erreicht werden. Ferner können Probleme, die bei Verwendung mehrerer unterschiedlich gefärbter Partikel zur Erzeugung Jaspé-artiger Strukturen auftreten, wie rheologische Probleme, vermieden werden. Selbstverständlich weist auch der mit diesem Verfahren hergestellte Linoleum-Bodenbelag aufgrund des Vorhandenseins des expandierbaren Graphits die vorstehend beschriebenen, ausgezeichneten Flammschutzeigenschaften auf.

Die vorliegend Erfindung sowie weitere sich daraus ergebende Vorteile werden in der nachfolgenden Beschreibung unter Bezugnahme auf die in den Beispielen und Vergleichsbeispielen beschriebenen Ausführungsformen näher erläutern.

### Beispiele

### Linoleum-Bodenbelag

Es werden Proben mit und ohne expandierbarern Graphit hergestellt. Dazu werden zunächst alle in den nachstehenden Tabelle 2 aufgelisteten Komponenten für die Linoleum-Masse in einem Kneter zu einer möglichst homogenen Grundmasse (Mischmasse) vermischt. Die so erhaltene Mischmasse wird durch ein Walzwerk zu Fellen verarbeitet und einem Kratzer zugeführt, wonach die dadurch erhaltenen unterschiedlich gefärbten Mischmassepartikel einem Kalander zugeführt werden und unter Druck und einer Temperatur von üblicherweise 10 bis 150°C auf Jute als Trägermaterial gepreßt werden. Die Bandgeschwindigkeit beträgt 10 m/min.

In der nachstehenden Tabelle 2 sind erfindungsgemäße Rezepturen sowie ein Vergleichsbeispiel in Gew.-%, bezogen auf die Menge der Gesamtmischung, aufgelistet. Ferner sind in Tabelle 2 noch weitere Materialeigenschaften der Linoleum-Masse bzw. des Linoleumbelags aufgelistet. Die in der nachstehenden Tabelle 2 angeführten Flammschutzmittel können in den jeweiligen Rezepturen dabei einzeln oder in Kombination von zwei oder mehreren davon eingesetzt werden.

**Tabelle 2**

| | | Bevorzugter Bereich | Besonders bevorzugter Bereich | Standard-Linoleum, (Vergleichsbeispiel) |
|---|---|---|---|---|
| Zement | [%] | 20-70 | 30-55 | 30-55 |
| Korkmehl | [%] | 0-60 | 2-25 | 2-25 |
| Holzmehl | [%] | 0-70 | 5-45 | 5-45 |
| Kreide | [%] | 0-75 | 5-60 | 5-60 |
| Titandioxid | [%] | 0-15 | 1-10 | 1-10 |
| Buntpigmente | [%] | 0-10 | 0-5 | 0-5 |
| NordMin 250^{®} | [%] | 0.01 - 30 | 1 - 20 | - |
| NordMin KP 251^{®} | [%] | 0,01 - 30 | 1 - 20 | - |
| Budit 3076 DC^{®} (Fa. Goldmann) | [%] | 0,01 - 30 | 1 - 20 | - |
| ATH M20B^{®} (Fa. Alcoa) | [%] | 0,01 - 30 | 1 - 20 | - |
| MFI 60°C (60sec) | [ml] | 0,5 - 25 | 1 - 20 | 1 - 20 |
| Stärke | [mm] | 1,0 - 4,0 | 2,0 - 4,0 | 2,0 - 4,0 |
| Index | [%] | 23 - 32 | 26 - 30 | 26 - 30 |
| Elastizität | [%] | 58 - 75 | 60 - 70 | 60 - 70 |
| Resteindruck | [%] | 4 - 15 | 5 - 10 | 5 - 10 |
| Reifezeit | [Tage] | 5 - 40 | 6 - 20 | 6 - 20 |
| Finishen | [µm] | 2-20 | 4-15 | 4 - 15 |
| Testresultat nach EN ISO 9239-1 unverklebt | Bestrahlungsstärke kW/m² | 8,0 - 11,6 | 8,3 - 11,2 | 4,5 - 6,5 |

Die in Tabelle 2 aufgeführten Rezepturen bzw. die daraus hergestellten Linoleum-Bodenbeläge gemäß der vorliegenden Erfindung zeigen drastisch verbesserte Flammschutzeigenschaften im Vergleich zu einem herkömmlichen Linoleum-Bodenbelag ohne Flammschutzmittel bei ansonsten im wesentlichen gleichbleibenden Eigenschaften.

## Patentansprüche

1. Verfahren zur Herstellung eines Bodenbelags auf Linoleum-Basis umfassend mindestens eine Nutzschicht aus Linoleum, welche mindestens ein Flammschutzmittel, ausgewählt aus der Gruppe der expandierbaren Graphite, unter Erhalten einer Jaspé-artigen Struktur, worin die Linoleum-Mischmasse einem Kratzer zugeführt wird und anschließend mittels Kalandern oder Walzwerken zu Fellen verarbeitet wird, wobei der in der Linoleum-Mischmasse enthaltene expandierbare Graphit im Kratzer unter Erhalt mehrfarbiger Mischmassepartikel ungleichmäßig aufgeschlossen wird und **dadurch** Granulate unterschiedlicher Graustufen resultieren, welche bei einem nachfolgenden Kalandrieren oder Walzen Jaspé-artige Strukturen ergeben.

2. Verfahren nach Anspruch 1, wobei in der Nutzschicht neben dem mindestens einen Flammschutzmittel aus der Gruppe der expandierbaren Graphite weiter ein Flammschutzmittel aus der Gruppe der verkohlungsfördemden Flammschutzmittel, der feuererstickenden Flammschutzmittel, der sperrschichtbildenden Flammschutzmittel, der Intumeszenzmittel oder ein mindestens zwei dieser Flammschutzmittel enthaltendes Gemisch vorliegt.

3. Verfahren nach Anspruch 2, wobei das Intumeszenzmittel aus der Gruppe, bestehend aus Harnstoff bzw. -Derivaten, Dicyandiamid, Melamin, Ammoniumpolyphosphaten, organischen Phosphaten und Gemischen davon, ausgewählt ist.

4. Verfahren nach einem der Ansprüche 1 bis 3, wobei der Anteil an Flammschutzmittel in der Nutzschicht aus Linoleum bis zu 40 Gew.-%. mehr bevorzugt von 0,1 bis 20 Gew.-%, bezogen auf die Menge der Nutzschicht, beträgt.

5. Verfahren nach Anspruch 1, wobei die erhaltenen Jaspé-Flächengebilde jeweils um 90° gedreht und schuppenartig übereinander gelegt werden, und dieses Konstrukt anschließend unter Erhalt von Fellen mit marmorähnlichen Strukturen kalandriert werden.

6. Verfahren nach Anspruch 1, wobei aus den erhaltenen Jaspé-Flächengebilde mehrfarbige Chips hergestellt werden, die anschließend unter Erhalt von Fellen mit ungerichteter Struktur kalandriert werden.

## Claims

1. A method of producing a floor covering based on linoleum including at least one wear layer made of linoleum, which contains at least one flame retardant selected from the group of expandable graphites to obtain a Jaspé-like structure, in which the linoleum mixed compound is supplied to a scraper and subsequently processed into rough sheets using calenders or rolling mills, wherein the expandable graphite contained in the linoleum mixed compound is non-uniformly digested in the scraper to obtain multicolored mixed compound particles and granulates of different grayscales result therefrom, which provide Jaspè-like textures upon a subsequent calendering or rolling.

2. The method according to Claim 1, wherein, in addition to the at least one flame retardant from the group of expendable graphites, a flame retardant from the group of flame retardants which promote charring, the fire-extinguishing flame retardants, the flame retardants which form a barrier layer, the intumescence agents, or a mixture containing at least two of these flame retardants is provided in the wear layer.

3. The method according to Claim 2, wherein the intumescence agent is selected from the group including urea and/or its derivatives, dicyandiamide, melamine, ammonium polyphosphates, organic phosphates, and mixtures thereof.

4. The method according to one of Claims 1 to 3, wherein the proportion of flame retardant in the wear layer made of linoleum is up to 40 weight-percent, more preferably from 0.1 to 20 weight-percent, in relation to the quantity of the wear layer.

5. The method according to Claim 1, wherein the Jaspé planar formations obtained are each rotated by 90° and laid one on top of another like scales, and this construct is subsequently calendered to obtain rough sheets having marble-like textures.

6. The method according to Claim 1, wherein multicolored chips are produced from the Jaspé planar formations obtained, which are subsequently calendered to obtain rough sheets having a non-oriented texture.

## Revendications

1. Procédé de production d'un revêtement de sol à base de linoléum comprenant au moins une couche d'usure en linoléum qui contient au moins un agent ignifuge sélectionné dans le groupe des graphites expansés, en conservant une structure de type Jaspé, dans laquelle la masse mélangée de linoléum est amenée à une raclette et est traitée ensuite au moyen de calandres ou de laminoirs pour former des peaux, le graphite expansé contenu dans la masse mélangée de linoléum étant dissout inégalement dans la raclette en conservant des particules de masse mélangée multicolores et des granulats de différents niveaux de gris en résultant, lesquels produisent des structures de type Jaspé lors d'un calandrage ou d'un laminage suivant.

2. Procédé selon la revendication 1, dans lequel la couche d'usure comprend un agent ignifuge du groupe des agents ignifuges favorisant la carbonisation, des agents ignifuges étouffant les flammes, des agents ignifuges formant une couche isolante, des agents intumescents ou un mélange contenant au moins deux de ces agents ignifuges, outre au moins un agent ignifuge du groupe des graphites expansés.

3. Procédé selon la revendication 2, dans lequel l'agent intumescent est sélectionné dans le groupe se composant de l'urée ou de ses dérivés, du dicyanamide, de la mélamine, des polyphosphates d'ammonium, des phosphates organiques et des mélanges de ceux-ci.

4. Procédé selon l'une quelconque des revendications 1 à 3, dans lequel la part d'agent ignifuge dans la couche d'usure en linoléum s'élève à 40 % en poids au maximum, de manière davantage préférée est comprise entre 0,1 et 20 % en poids, sur base de la quantité de couche d'usure.

5. Procédé selon la revendication 1, dans lequel les structures planes Jaspé obtenues sont pivotées respectivement de 90 ° et posées l'une sur l'autre en formation imbriquée, et cette structure est ensuite calandrée en conservant les peaux avec des structures semblables au marbre.

6. Procédé selon la revendication 1, dans lequel des puces multicolores qui sont ensuite calandrées en conservant les peaux avec une structure non alignée, sont fabriquées à partir des structures planes Jaspé obtenues.
